# EUROPEAN PATENT APPLICATION

(11) **EP 2 103 408 A1**
(43) Date of publication of application: **23.09.2009**
(21) Application number: 08253991.7
(22) Date of filing: 12.12.2008
(51) Int. Cl.: B29C 45/14, B29C 45/06

(54) **Injection mold and method for making a housing using the injection mold**

(30) Priority: 19.03.2008 CN 200810300630
(71) Applicant: Shenzhen Futaihong Precision Industry Co., Ltd., Shenzhen City, Guangdong Province 518109 (CN); FIH (Hong Kong) Limited, Hong Kong (HK)
(72) Inventor: Wu, Kun-Tsan, Shindian City Taipei Hsien Taiwan 231 (CN); Tien, Li-Wen, Shindian City Taipei Hsien Taiwan 231 (CN); Wu, Xiao-Chao, ShenZhen City Guangdon Province 518109 (CN)
(74) Representative: Craven, Ian

(57) **Abstract**

An injection mold (100) comprises a first female mold (10), a second female mold (20), a first male mold (30) and a second male mold (40). The first male mold (30) and the second male mold (40) rotate to align with the first female mold (10) and the second female mold (20) selectively. One of the female molds defines a cutting portion. The injection mold (100) carries on the cutting process on a soft layer of a semi-finished product. The injection mold (100) can eliminate cutting process by using punching and cutting fixture on the soft layer and save lots of time on making the product, improve processing efficiency.

## Description

### 1. Field of the Invention

The present invention relates to an injection mold and a method for making a housing using the injection mold and especially relates to a rotating injection mold and a method for making a housing with soft layer using the rotating injection mold.

### 2. Description of related art

The housing is one of the main components of electronic devices, such as telephones, computers and etc. Because molded articles have advantages of being light, low cost and anti-corrosion, housings for electronic devices are often made by injection molding.

To enable the housings to have a good touch feel, in the prior art, a soft layer, such as leather or fabric is formed on the housings. When making such housings, the soft layer is firstly positioned into the mold. After injecting plastic material into the mold, the plastic material is cooled and attaches to the soft layer to form a semi-finished product. The semi-finished product is then removed from the mold and superfluous edges of the soft layer cut. However, the cutting process can be complicated, and the processing efficiency is low.

Therefore, there is room for improvement within the art.

### BRIEF DESCRIPTION OF THE DRAWINGS

FIG. 1 shows a schematic view of an exemplary embodiment of the present injection mold;

FIG. 2 shows a cross-sectional view of a housing making by the injection mold;

FIG. 3 shows a schematic view of a first soft layer of the housing put in the injection mold;

FIG. 4 shows a schematic view of closing the injection mold to injecting;

FIG. 5 shows a schematic view of rotated the injection mold;

FIG. 6 shows a schematic view of the injection mold rotating injection and opening after cutting; and

FIG. 7 shows a schematic view of another exemplary embodiment of the injection mold.

### DETAILED DESCRIPTION OF THE EXEMPLARY EMBODIMENTS

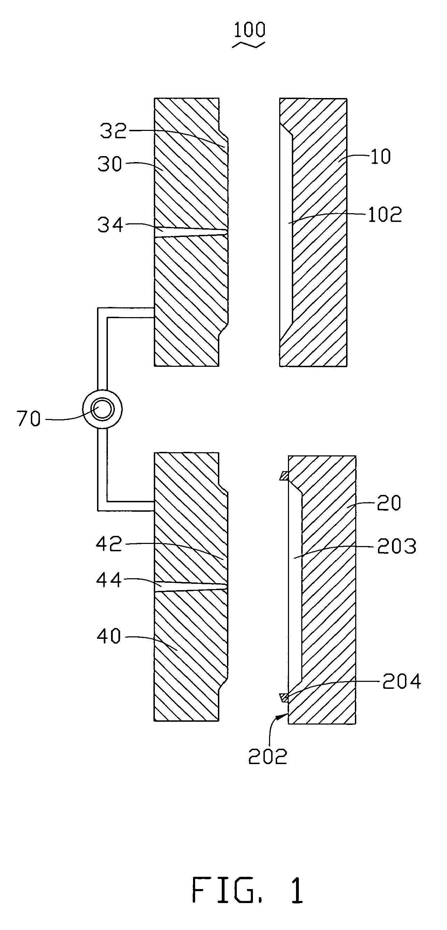

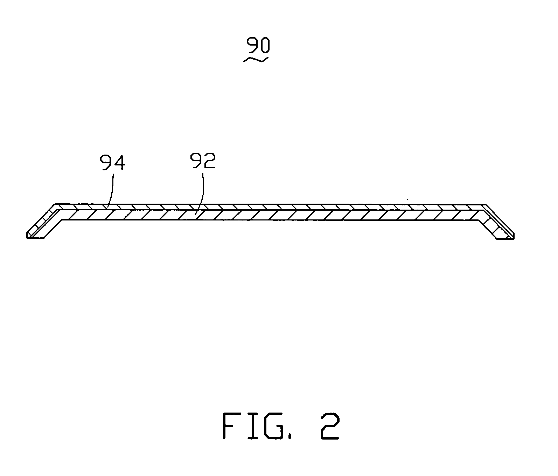

FIG 1 shows an exemplary embodiment of an injection mold 100 used to make a housing 90 (FIG 2) including a main body 92 and a soft layer 94 formed on the main body 92.

The injection mold 100 is a rotating injection mold including a first female mold 10, a second female mold 20, a first male mold 30 and a second male mold 40 connected to the first male mold 30.

The first female mold 10 defines a first cavity 102. The second female mold 20 includes a joining surface 202 facing to one of the first male mold 30 and the second male mold 40, a second cavity 203 defined therein and two cutting portions 204 formed on the joining surface 202. The cutting portion 204 may be a cutting mold with blades for cutting the soft layer 94 on a semi-finished product of the housing 90.

The first male mold 30 has a first protruding portion 32 and a first runner 34 extending through the first male mold 30. The second male mold 40 has a similar structure as the first male mold 30. The second male mold 40 has a second protruding portion 42, and a second runner 44 extending through the second male mold 40. The first male mold 30 and the second male mold 40 are mounted on a rotating platform 70. The rotating platform 70 drives the first male mold 30 and the second male mold 40 to rotate to respectively match with the first female mold 10 and second female mold 20.

The method for making the housing 90 by using the injection mold 100 includes following steps:

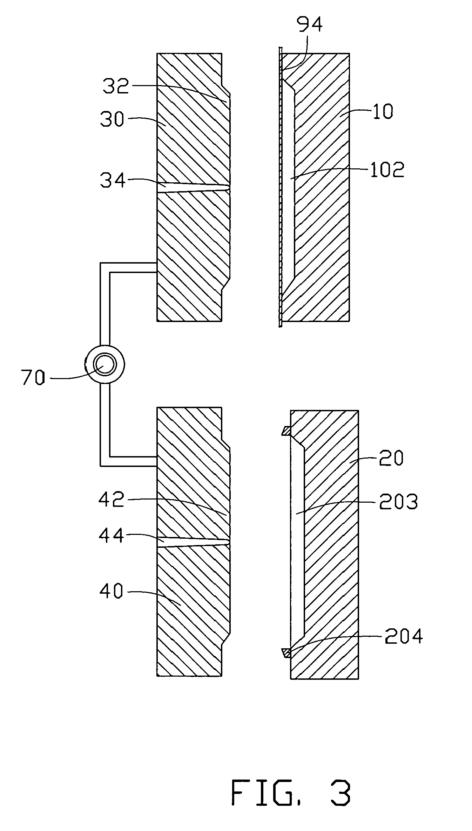

Referring to FIG. 3, the injection mold 100 is opened, with the two male molds separated from the two female molds. At this moment, the first male mold 30 aligns with the first female mold 10, and the second male mold 40 aligns with the second female mold 20.

A preformed soft layer 94 is then placed on the first female mold 10 to enclose the first cavity 102.

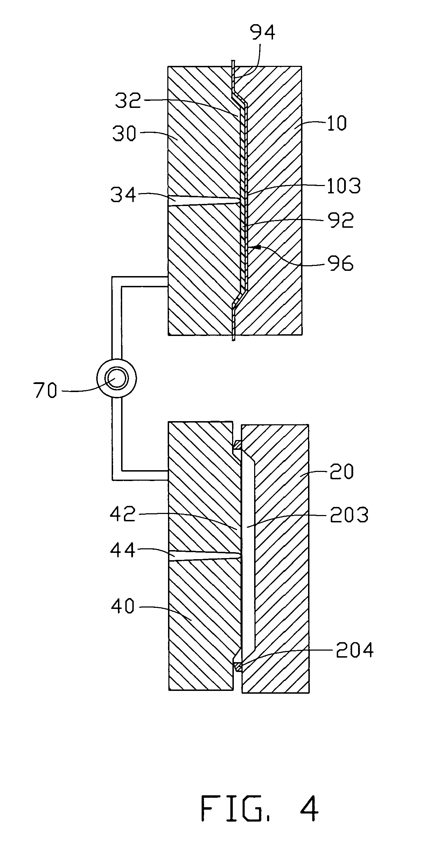

In FIG. 4, the injection mold 100 is closed. The first male mold 30 and the first female mold 10 define a first chamber 103 therebetween. The first protruding portion 32 of the first male mold 30 pushes the preformed soft layer 94 into the cavity 102 of the first female mold 10.

A melted material (e.g., plastic and/or silicone) is injected into the first chamber 103 through the first runner 34 to combine with the soft layer 94. As such, a first semi-finished product 96 of the housing 90 is formed.

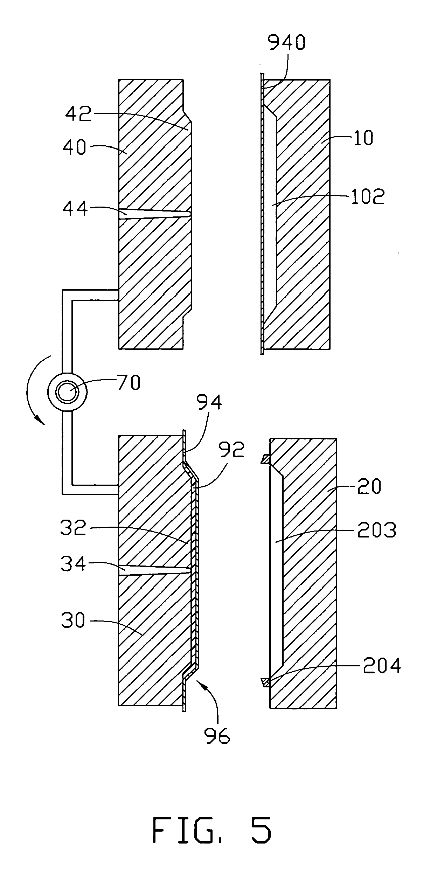

After the first semi-finished product 96 is cooled, the injection mold 100 is opened (FIG 5). The first semi-finished product 96 is attached to the first protruding portion 32 of the first male mold 30. The rotating platform 70 rotates the first male mold 30 and the second male mold 40 to make the first male mold 30 with the first semi-finished product 96 align with the second female mold 20.

The injection mold 100 is closed again. The first male mold 30 moves towards the second female mold 20, and superfluous edges of the preformed soft layer 94 are then cut by the cutting portion 204. The housing 90 is complete.

Finally, the injection mold 100 is opened. The housing 90 is removed from the injection mold 100.

It is to be understood, in the sixth step, before the injection mold 100 is closed, another preformed soft layer 940 can be put onto the first female mold 10 to cover the first cavity 102. At the same times, a second chamber (not shown) is formed by the second male mold 40 and the first female mold 10. Then, melted material is injected into the second chamber through the second runner 44. The melted material combines with another preformed soft layer 940 to form a second semi-finished product 960 of the housing 90.

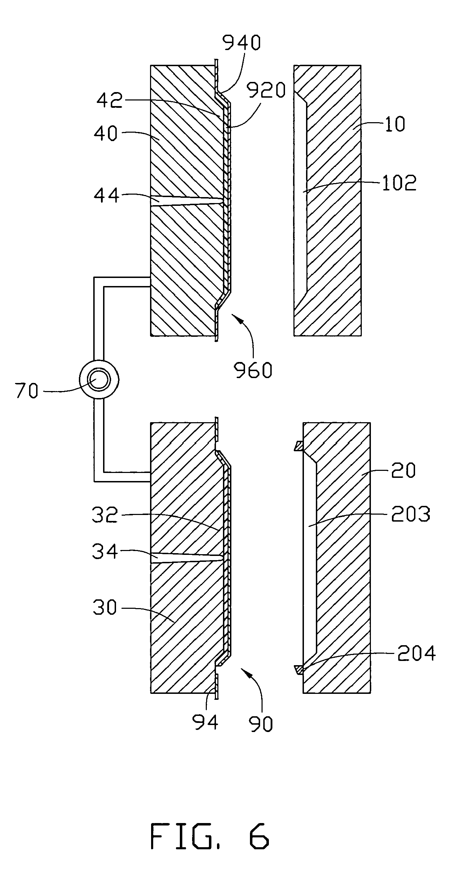

Referring to FIG. 6, the injection mold 100 is cooled down, so the melted material is cooled to become a main body 920. The rotating platform 70 of the injection mold 100 is rotated 180 degrees and the above processing steps repeated.

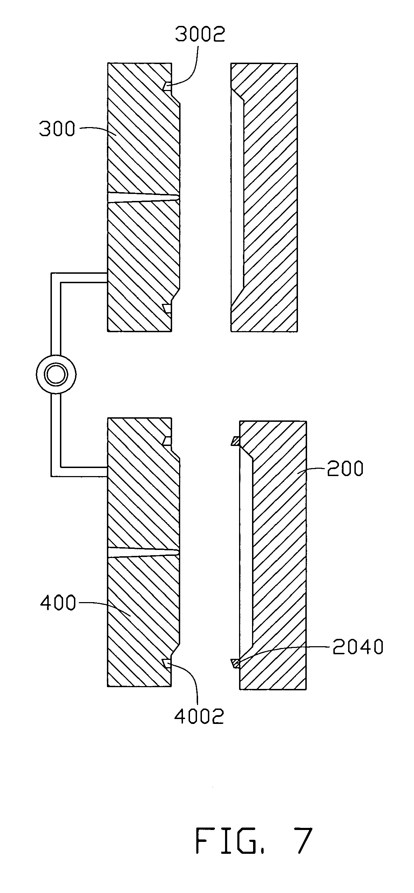

Referring to FIG. 7, in a further embodiment, the injection mold 100 may include two receiving slots 3002, 4002. The receiving slots 3002, 4002 are defined between the first male mold 300 and the second male mold 400 corresponding to the cutting portions 2040 of the second female mold 200. During a cutting process, the two cutting portions 2040 are inserted into the receiving slots 3002, 4002 to achieve a more precise cutting effect.

It is to be understood, however, that even through numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. An injection mold comprising:
a first female mold;
a second female mold; and
a first male mold and a second male mold, either of the first and second male molds selectively rotatable to align with one of the first female mold and the other of the male molds aligned with second female mold;
wherein one of the first female mold and the second female mold includes a cutting portion formed thereon.

2. The injection mold as claimed in claim 1, wherein one of the female molds includes a joining surface oppositing to one of the first male mold and female mold, the cutting portion is set on the joining surface.

3. The injection mold as claimed in claim 2, wherein the cutting portion is a cutting mold with blades.

4. The injection mold as claimed in claim 3, wherein the injection mold also includes a rotating platform rotatably supporting the first male mold and the second male mold.

5. The injection mold as claimed in claim 4, wherein a receiving slot is defined on a corresponding cutting portion of the first male mold and the second male mold.

6. A method for making a housing by an injection mold, comprising the steps of:
providing an injection mold, the injection mold comprising:
a first female mold;
a second female mold;
a first male mold; and
the first male mold rotating to selectably align with one of the first female mold and
the second female mold, one of the first female mold and the second female mold
defines a cutting portion;
putting a first soft layer on the first female mold;
injecting melted material to combine with the first soft layer for forming a first semi-finished product with superfluous edges the first soft layer on the first male mold;
opening the injection mold and rotating the first male mold from facing the first female mold to facing the second female mold; and
moving the first male mold towards the second female mold to cut the superfluous edges of first soft layer.

7. The method for making a housing by an injection mold as claimed in claim 6, wherein one of the female molds includes a joining surface oppositing to the first male mold, the cutting portion is set on the joining surface.

8. The method for making a housing by an injection mold as claimed in claim 7, wherein the cutting portion is a cutting mold with blades.

9. The method for making a housing by an injection mold as claimed in claim 8, wherein the injection mold also includes a rotating platform rotatably supporting the first male mold and the second male mold.

10. The method for making a housing by an injection mold as claimed in claim 9, wherein a receiving slot is defined on corresponding to the cutting portion of the first male mold and the second male mold.
